(19) 

**Europäisches Patentamt**
**European Patent Office**
**Office européen des brevets**

(11) **EP 4 603 539 A1**

(12) **EUROPEAN PATENT APPLICATION**
published in accordance with Art. 153(4) EPC

(43) Date of publication:
**20.08.2025 Bulletin 2025/34**

(21) Application number: **23877267.7**

(22) Date of filing: **10.10.2023**

(51) International Patent Classification (IPC):
**C08L 67/04** $^{(2006.01)}$        **B29C 49/06** $^{(2006.01)}$
**C08K 5/14** $^{(2006.01)}$

(52) Cooperative Patent Classification (CPC):
**B29C 49/06; C08K 5/14; C08L 67/04**

(86) International application number:
**PCT/JP2023/036664**

(87) International publication number:
**WO 2024/080263 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022 JP 2022164500**

(71) Applicants:
• **Nissei Plastic Industrial Co., Ltd.
  Hanishina-gun, Nagano 389-0693 (JP)**
• **Sekisui Kasei Co., Ltd.
  Kita-ku
  Osaka-shi
  Osaka 530-8565 (JP)**
• **HighChem Company Limited
  Tokyo 105-0001 (JP)**

(72) Inventors:
• **WAKABAYASHI, Eiki
  Hanishina-gun, Nagano 389-0693 (JP)**
• **TOZAWA, Keiichi
  Hanishina-gun, Nagano 389-0693 (JP)**
• **FUKUYAMA, Eiji
  Osaka-shi, Osaka 530-8565 (JP)**
• **TAZUMI, Kohei
  Osaka-shi, Osaka 530-8565 (JP)**
• **TAI, Tetsuro
  Osaka-shi, Osaka 530-8565 (JP)**
• **NISHIMURA, Nobuya
  Osaka-shi, Osaka 530-8565 (JP)**
• **HATTORI, Teruo
  Tokyo 105-0001 (JP)**

(74) Representative: **Berghofer, Benedikt et al
Kroher Strobel
Rechts- und Patentanwälte PartmbB
Bavariaring 20
80336 München (DE)**

(54) **POLYLACTIC ACID RESIN COMPOSITION FOR INJECTION BLOW MOLDING, METHOD FOR PRODUCING POLYLACTIC ACID RESIN COMPOSITION, INJECTION BLOW MOLDED BODY, AND METHOD FOR PRODUCING INJECTION BLOW MOLDED BODY**

(57)    A polylactic acid resin for injection blow molding is obtained by modifying a polylactic acid resin with an organic peroxide and is used for injection blow molding, and in this polylactic acid resin composition for injection blow molding, the melt tension at 190°C is 20.0 cN or more and 85.0 cN or less, while in a process of temperature decrease at 5°C/min conducted using a differential scanning calorimeter, the crystallization temperature is 120°C or lower, or there is no crystallization peak.

**EP 4 603 539 A1**

**Description**

TECHNICAL FIELD

The present invention relates to a polylactic acid resin composition suitable for injection blow molding and a production technology for the polylactic acid resin composition. More particularly, the invention relates to a production technology for controlling the melt tension and the crystallization rate. A polylactic acid resin composition having excellent processability is provided by this production technology.

[Explanation of units]

The meanings of the units used in this specification are as follows.
Regarding the units of time, h denotes hour, min denotes minute, and s denotes second.
Regarding the unit of amount, L denotes liter.
Regarding the unit of force, N denotes newton.
Regarding the unit of concentration, N denotes normal.
Regarding the unit of speed, rpm denotes the number of rotations per minute.
Regarding the unit of viscosity, Pa·s denotes Pascal second.
Gram equivalent is described as g/eq.

BACKGROUND ART

In recent years, due to growing environmental awareness, it is preferable to utilize materials that are easily degradable in nature. That is, it has been investigated to utilize aliphatic polyester-based resins that are easily degradable in nature, such as a polylactic acid resin, as materials for various manufactured products.
However, a polylactic acid resin generally has drawbacks such as low melt tension and poor processability.
Various improvement technologies for compensating these drawbacks have been proposed (see, for example, Patent Document 1, Patent Document 2, and Patent Document 3).
That is, Patent Document 1 discloses a technology of modifying a polylactic acid resin with a specific organic peroxide. With this technology, a polylactic acid resin having excellent melt tension is obtained while suppressing the occurrence of foul odor problems.
Furthermore, Patent Document 2 discloses a technology for modifying a polylactic acid resin with an organic peroxide. With this technology, a polylactic acid-based resin composition for injection molding, which has rheological characteristics suitable for injection molding and can improve productivity in injection molding, is obtained.
Furthermore, Patent Document 3 discloses a technology for modifying a polylactic acid resin with an organic peroxide. With this technology, a lactic acid-based resin composition having excellent processability and physical properties in addition to their inherent biodegradability, and a molded body formed therefrom are obtained.
The inventors of the present invention conducted research on producing injection blow molded bodies such as containers using various resins. When generalpurpose resins other than polylactic acid resins were used, good-quality injection blow molded bodies were obtained without any problem. In contrast, polylactic acid resins have problems with moldability, productivity was decreased. Detailed investigation was further conducted, and it was found that crystallization proceeds during injection blow molding, and this crystallization hinders plastic deformation.
As described above, Patent Document 1 to Patent Document 3 provide technologies for obtaining a polylactic acid resin excellent in terms of foaming properties, injection moldability, and the like by modifying polylactic acid and improving the melt tension and rheological characteristics.
However, in Patent Document 1 to Patent Document 3, the investigation on the crystallization rate was not sufficiently carried out. As a result, productivity could not be increased in the conventional technologies.
While an improvement in productivity is required, there is a demand for a polylactic acid resin composition having excellent injection blow moldability and a production technology for the polylactic acid resin composition.

CITATION LIST

PATENT DOCUMENT

Patent Document 1: Japanese Unexamined Patent Publication No. 2019-183140
Patent Document 2: Japanese Unexamined Patent Publication No. 2007-262222

Patent Document 3: Japanese Unexamined Patent Publication No. 2003-171544

SUMMARY OF THE INVENTION

PROBLEM TO BE SOLVED BY THE INVENTION

It is an object of the present invention to provide a polylactic acid resin composition having excellent injection blow moldability and a production technology for the polylactic acid resin composition.

MEANS FOR SOLVING PROBLEM

The present inventors considered the following.

In the conventional technologies, crystallization during injection blow molding lowers productivity. In a case where crystallization is suppressed during injection blow molding, an improvement in the productivity can be expected. If complete amorphization is not possible, deterioration of moldability can be suppressed by allowing crystallization at an end stage of injection blow molding, and an improvement in the productivity can be expected.

Based on these ideas, polylactic acid resins were modified with organic peroxides, and a plurality of types of polylactic acid resin compositions thus obtained were evaluated. As a result, it was found that when the crystallization temperature in a process of temperature decreases at 5°C/min as measured using a differential scanning calorimeter is 120°C or lower, an improvement in the productivity can be expected.

However, in injection blow molding, a parison is inflated with a fluid (compressed air or the like). When the melt tension of the parison at 190°C is less than 20.0 cN, the melt tension is so low that the molded body may rupture. Furthermore, when the melt tension of the parison at 190°C is more than 85.0 cN, it may be difficult for the parison to stretch, and the molded body may crack.

It was found that when the melt tension at 190°C is 20.0 cN or more and 85.0 cN or less, rupture and cracking can be suppressed.

Based on the above findings, the present invention has the following embodiments.

[1]: A polylactic acid resin composition for injection blow molding, obtained by modifying a polylactic acid resin with an organic peroxide and used for injection blow molding,

   wherein the melt tension at 190°C is 20.0 cN or more and 85.0 cN or less, and
   in a process of temperature decrease at 5°C/min conducted using a differential scanning calorimeter, the crystallization temperature is 120°C or lower, or there is no crystallization peak.

[2]: The polylactic acid resin composition for injection blow molding according to the item [1], wherein the polylactic acid resin composition has a melt mass flow rate of 0.1 g/10 min or more and 20.0 g/10 min or less at a temperature of 190°C and a nominal load of 21.18 N.

[3]: The polylactic acid resin composition for injection blow molding according to the item [1], wherein the polylactic acid resin composition has a melt mass flow rate of 0.1 g/10 min or more and 10.0 g/10 min or less at a temperature of 190°C and a nominal load of 21.18 N.

[4]: The polylactic acid resin composition for injection blow molding according to any one of the items [1] to [3], wherein the proportion occupied by the D-form in the sum of the D-form and the L-form in the polylactic acid resin composition is 3.0 mol% or more and 20.0 mol% or less.

[5]: The polylactic acid resin composition for injection blow molding according to any one of the items [1] to [3], wherein the proportion occupied by the D-form in the sum of the D-form and the L-form in the polylactic acid resin composition is 3.3 mol% or more and 18.0 mol% or less.

[6]: The polylactic acid resin composition for injection blow molding according to any one of the items [1] to [3], wherein the proportion occupied by the D-form in the sum of the D-form and the L-form in the polylactic acid resin composition is 3.5 mol% or more and 15.0 mol% or less.

[7]: The polylactic acid resin composition for injection blow molding according to any one of the items [1] to [6], wherein the polylactic acid resin is modified using the organic peroxide at a proportion of 0.10 parts by mass or more and 3.00 parts by mass or less with respect to 100 parts by mass of the polylactic acid resin.

[8]: A method for producing a polylactic acid resin composition, intended for producing the polylactic acid resin composition according to any one of the items [1] to [3],

the method including producing the polylactic acid resin composition by melt-kneading 100 parts by mass of a polylactic acid resin composition in which the proportion occupied by the D-form in the sum of the D-form and the L-form is 3.0 mol% or more and 20.0 mol% or less, with an organic peroxide at a proportion of 0.10 parts by mass or more and 3.00 parts by mass or less.

[9]: A method for producing a polylactic acid resin composition, intended for producing the polylactic acid resin composition according to any one of the items [1] to [3],

the method including producing the polylactic acid resin composition by melt-kneading 100 parts by mass of a polylactic acid resin composition in which the proportion occupied by the D-form in the sum of the D-form and the L-form is 3.3 mol% or more and 18.0 mol% or less, with an organic peroxide at a proportion of 0.10 parts by mass or more and 3.00 parts by mass or less.

[10]: A method for producing a polylactic acid resin composition, intended for producing the polylactic acid resin composition according to any one of the items [1] to [3],

the method including producing the polylactic acid resin composition by melt-kneading 100 parts by mass of a polylactic acid resin composition in which the proportion occupied by the D-form in the sum of the D-form and the L-form is 3.5 mol% or more and 15.0 mol% or less, with an organic peroxide at a proportion of 0.10 parts by mass or more and 3.00 parts by mass or less.

[11]: An injection blow molded body obtained by injection blow molding the polylactic acid resin composition according to any one of the items [1] to [7].

[12]: A method for producing an injection blow molded body, in which an injection blow molded body is obtained by injection blow molding the polylactic acid resin composition according to any one of the items [1] to [7].

[13]: The method for producing an injection blow molded body according to the item [12], the method including:

a preparation step of preparing an injection blow molding apparatus having an injection device for injecting the polylactic acid resin composition in a molten state, a parison mold for molding a parison, and a blow mold for performing blow molding;

a parison molding step of injecting the polylactic acid resin composition into the parison mold using the injection device to obtain the parison;

a transfer step of transferring the obtained parison from the parison mold to the blow mold; and

a blow molding step of obtaining an injection blow molded body by blow molding the transferred parison in the blow mold.

EFFECT OF THE INVENTION

According to the present invention, a polylactic acid resin composition having excellent injection blow moldability is provided.

BRIEF DESCRIPTION OF DRAWINGS

FIG. 1 is a diagram illustrating the method for producing a polylactic acid resin composition according to the present invention;

FIG. 2 is a diagram illustrating the basic configuration of an injection blow molding apparatus;

FIG. 3 is a diagram illustrating the basic configuration of a core;

FIG. 4 is a diagram illustrating the heat pattern for crystallization temperature and the heat pattern for crystallization time;

FIG. 5 is a DSC curve related to the crystallization temperature of Example 1;

FIG. 6 is a DSC curve related to the crystallization time of Comparative

Example 1; and

FIG. 7(a) is a diagram illustrating the configuration at an early stage of blow molding, FIG. 7(b) is a diagram illustrating the configuration at a middle stage of blow molding, and FIG. 7(c) is a diagram illustrating the configuration at an end stage of blow molding.

MODE(S) FOR CARRYING OUT THE INVENTION

Embodiments of the present invention will be described below based on the attached drawings.

[Polylactic acid resin]

The polylactic acid resin of the present embodiment may be a homopolymer of lactic acid or may be a copolymer of lactic acid and another monomer.

Examples of the other monomer in the copolymer include an aliphatic hydroxycarboxylic acid other than lactic acid, an aliphatic polyhydric alcohol, and an aliphatic polyvalent carboxylic acid.

The monomer may be, for example, a polyfunctional polysaccharide.

With regard to the polylactic acid resin of the present embodiment, it is preferable that the proportion occupied by the D-form in the sum of the D-form and the L-form is 3.0 mol% or more.

The proportion of the D-form is more preferably 3.3 mol% or more, and particularly preferably 3.5 mol% or more.

The proportion of the D-form is preferably 20.0 mol% or less, more preferably 18.0 mol% or less, and particularly preferably 15.0 mol% or less.

When the polylactic acid resin of the present embodiment has a proportion of the D-form of less than 3.0 mol%, the crystallization rate becomes fast, allowing crystallization to proceed during injection blow molding, and moldability is decreased.

Furthermore, when the polylactic acid resin of the present embodiment has a proportion of the D-form of more than 20.0 mol%, yellowing of the resin becomes noticeable, and the appearance is deteriorated.

Examples of the aliphatic polyvalent carboxylic acid constituting the copolymer include oxalic acid, succinic acid, malonic acid, glutaric acid, adipic acid, pimelic acid, suberic acid, azelaic acid, undecanedioic acid, and dodecanedioic acid.

The aliphatic polyvalent carboxylic acid may be an anhydride.

Examples of the aliphatic polyhydric alcohol include ethylene glycol, diethylene glycol, triethylene glycol, propylene glycol, dipropylene glycol, 1,3-butanediol, 1,4-butanediol, 3-methyl-1,5-pentanediol, 1,6-hexanediol, 1,9-nonanediol, neopentyl glycol, tetramethylene glycol, and 1,4-cyclohexanedimethanol.

Examples of the hydroxycarboxylic acid other than lactic acid, which constitutes the copolymer, include glycolic acid, 3-hydroxybutyric acid, 4-hydroxybutyric acid, 4-hydroxyvaleric acid, 5-hydroxyvaleric acid, and 6-hydroxycaproic acid.

Examples of the polyfunctional polysaccharide include cellulose, cellulose nitrate, methyl cellulose, ethyl cellulose, celluloid, viscose rayon, regenerated cellulose, cellophane, cupra, cuprammonium rayon, cuprophane, Bemberg, hemicellulose, starch, acropectin, dextrin, dextran, glycogen, pectin, chitin, chitosan, gum Arabic, guar gum, locust bean gum, and acacia gum.

The polylactic acid resin according to the present embodiment may be blended with other resins to the extent that does not impair the performance of the polylactic acid resin.

[Modification]

The polylactic acid resin (polylactic acid resin having melting characteristics) can be obtained by modifying a commercially available polylactic acid resin.

Regarding the modification, a crosslinked structure or a long-chain branched structure can be incorporated into the molecular structure of the polylactic acid resin, or the molecular weight of the polylactic acid resin can be increased.

For the molecular weight increase of the polylactic acid resin, a chain extending agent such as carbodiimide, and the like may be used.

Furthermore, the modification with a chain extending agent can be carried out using a compound having one or a plurality of functional groups capable of undergoing a condensation reaction with a hydroxyl group or a carboxyl group present in the molecular structure of the polylactic acid resin, such as an acrylic organic compound, an epoxy-based organic compound, or an isocyanate-based organic compound.

That is, the modification can be carried out by a method of binding an acrylic organic compound, an epoxy-based organic compound, an isocyanate-based organic compound, or the like to the polylactic acid resin by a reaction.

Modification of the polylactic acid resin by crosslinking or long-chain branching can be carried out by, for example, a method of allowing the molecules of the polylactic acid resin to react with each other by a radical initiator.

Among the above-described modification methods, it is preferable to allow the molecules of the polylactic acid resin to react with each other using a radical initiator, from the viewpoint that incorporation of other components can be suppressed.

Furthermore, when an appropriate radical initiator is used to react with the polylactic acid resin, radicals are generated in the polylactic acid resin by the radical initiator. These radicals generated in the polylactic acid resin react with each other in an extruder and form crosslinking points (branching points) of the polylactic acid resin, thereby stabilizing the resin.

The polylactic acid resin can be incorporated with a crosslinked structure or a long chain branched structure in the molecular structure of the polylactic acid resin, or the molecular weight of the polylactic acid resin can be increased, by achieving such modifications.

Examples of the radical initiator used for modifying the polylactic acid resin include an organic peroxide, an azo compound, and a halogen molecule.

Among these, an organic peroxide is preferred.

[Organic peroxide]

Examples of the organic peroxide used in the present embodiment include a peroxy ester, a hydroperoxide, a dialkyl peroxide, a diacyl peroxide, a peroxydicarbonate, a peroxy ketal, and a ketone peroxide.

Examples of the peroxy ester include t-butylperoxy-2-ethylhexyl carbonate, t-hexylperoxyisopropyl monocarbonate, t-hexyl peroxybenzoate, t-butyl peroxybenzoate, t-butyl peroxylaurate, t-butyl peroxy-3,5,5-trimethylhexanoate, t-butyl peroxyacetate, 2,5-dimethyl-2,5-di(benzoylperoxy)hexane, and t-butylperoxyisopropyl monocarbonate.

Examples of the hydroperoxide include permethane hydroperoxide, diisopropylbenzene hydroperoxide, cumene hydroperoxide, and t-butyl hydroperoxide.

Examples of the dialkyl peroxide include dicumyl peroxide, di-t-butyl peroxide, and 2,5-dimethyl-2,5-di(t-butylperoxy)hexyne-3.

Examples of the diacyl peroxide include dibenzoyl peroxide, di(4-methylbenzoyl) peroxide, and di(3-methylbenzoyl) peroxide.

Examples of the peroxydicarbonate include di(2-ethylhexyl) peroxydicarbonate and diisopropyl peroxydicarbonate.

Examples of the peroxy ketal include 1,1-di-t-butylperoxy-3,3,5-trimethylcyclohexane, 1,1-di-t-butylperoxycyclohexane, 2,2-di(t-butylperoxy)-butane, n-butyl 4,4-di(t-butylperoxy)valerate, and 2,2-bis(4,4-di-t-butylperoxycyclohexyl)propane.

Examples of the ketone peroxide include methyl ethyl peroxide and acetylacetone peroxide.

(Preferable amount of organic peroxide)

The organic peroxide such as described above is usually used at a proportion of 0.10 parts by mass or more with respect to 100 parts by mass of the polylactic acid resin to be modified, although the proportion may vary depending on the molecular weight and the like of the polylactic acid resin.

The amount of the organic peroxide used is preferably 0.20 parts by mass or more, and particularly preferably 0.30 parts by mass or more.

Furthermore, the organic peroxide is usually used at a proportion of 3.00 parts by mass or less with respect to 100 parts by mass of the polylactic acid resin to be modified, although the proportion may vary depending on the molecular weight and the like of the polylactic acid resin.

The amount of the organic peroxide used is preferably 2.50 parts by mass or less, more preferably 2.00 parts by mass or less, and particularly preferably 1.50 parts by mass or less.

When the polylactic acid resin is modified using an organic peroxide at such a proportion, the polylactic acid resin after modification can be made suitable for injection blow molding.

The organic peroxide as described above can be made to more reliably exert the effect of modification on the polylactic acid resin, when the amount of the organic peroxide used is 0.10 parts by mass or more.

Furthermore, the organic peroxide can suppress mixing of gel in the polylactic acid resin after modification, when the amount of the organic peroxide used is 3.00 parts by mass or less.

[Crosslinking aid]

Regarding the method for modifying the polylactic acid resin, a crosslinking aid may be used together with the organic peroxide. Examples of the crosslinking aid include divinylbenzene, diallylbenzene, divinylnaphthalene, divinylphenyl, divinylcarbazole, and divinylpyridine.

The crosslinking aid may be a polyfunctional acrylic acid-based compound such as ethylene glycol diacrylate, butylene glycol diacrylate, triethylene glycol diacrylate, 1,6-hexanediol diacrylate, tetramethylolmethane tetraacrylate; a polyfunctional methacrylic acid-based compound such as ethylene glycol dimethacrylate, butylene glycol dimethacrylate, triethylene glycol dimethacrylate, tetraethylene glycol dimethacrylate, 1,6-hexanediol dimethacrylate, 1,9-nonanediol dimethacrylate, 1,10-decanediol dimethacrylate, trimethylolpropane trimethacrylate, or tetramethylolmethane tetramethacrylate; or the like.

Regarding the crosslinking aid, polyvinyl esters, polyallyl esters, polyacryloyloxyalkyl esters, and polymethacryloyloxyalkyl esters of aliphatic and aromatic polyvalent carboxylic acids such as divinyl phthalate, diallyl phthalate, diallyl maleate, bisacryloyloxyethyl terephthalate; polyvinyl ethers and polyallyl ethers of aliphatic and aromatic polyhydric alcohols such as diethylene glycol divinyl ether, hydroquinone divinyl ether, and bisphenol A diallyl ether; allyl esters of cyanuric acid or isocyanuric acid, such as triallyl cyanurate and triallyl isocyanurate; triallyl phosphates; trisacryloxyethyl phosphate; maleimide-based compounds such as N-phenylmaleimide and N,N'-m-phenylenebismaleimide; and polyfunctional monomers such as a compound having two or more triple bonds, such as dipropargyl phthalate and dipropargyl maleate.

The crosslinking aid may be a polymer-type agent having an epoxy group that can be bonded to a hydroxyl group or a carboxyl group of the polylactic acid resin. A polymer-type crosslinking agent of this kind is suitable from the viewpoint of having a chain extending function.

Examples of the polymer-type crosslinking agent include an epoxy group-containing (meth)acrylic polymer.

Examples of the epoxy group-containing (meth)acrylic polymer include a styrene-glycidyl (meth)acrylate copolymer.

Regarding the styrene-glycidyl (meth)acrylate copolymer, it is preferable that the proportion of glycidyl methacrylate in the copolymer is more than 20% by mass. The proportion of glycidyl methacrylate in the copolymer is more preferably more than 30% by mass, and particularly preferably more than 50% by mass. The epoxy equivalent of this copolymer is, for example, 150 to 3000 g/eq.

The epoxy equivalent may also be 200 to 500 g/eq. The mass average molecular weight (Mw) of the styrene-glycidyl (meth)acrylate copolymer is, for example, 2000 to 25000. The mass average molecular weight (Mw) may also be 3000 to 8000.

The number average molecular weight (Mn) of the styrene-glycidyl (meth)acrylate copolymer can be, for example, 400 to 6000. The number average molecular weight (Mn) may also be 1000 to 4000. The dispersity (Q value = Mw/Mn) of the styrene-glycidyl (meth)acrylate copolymer is, for example, 1.5 to 5.

Regarding the epoxy group-containing (meth)acrylic polymer, commercially available products marketed under the trade name "Joncryl" from BASF, commercially available products marketed under the trade name "ARUFON" from Toagosei Company, Limited, and commercially available products marketed under the trade name "Marproof" (registered trademark) from NOF CORPORATION may be used.

Furthermore, the crosslinking aid is usually used at a proportion of 2.00 parts by mass or less with respect to 100 parts by mass of the polylactic acid resin to be modified, although the proportion may vary depending on the molecular weight and the like of the polylactic acid resin.

The amount of the crosslinking aid used is preferably 1.50 parts by mass or less, more preferably 1.00 parts by mass or less, and particularly preferably 0.50 parts by mass or less.

The crosslinking aid such as described above can more reliably exhibit the effect of modification on the polylactic acid resin when the amount of the crosslinking aid used is 0.10 parts by mass or more.

[Polylactic acid resin composition]

When the polylactic acid resin described above is modified with the organic peroxide, the resultant becomes a polylactic acid resin composition. The method for producing this polylactic acid resin composition will be described below.

Incidentally, since it is optional to use a crosslinking aid together with an organic peroxide, an organic peroxide used together with a crosslinking aid, and an organic peroxide that is used without a crosslinking aid will be collectively referred to simply as organic peroxides.

Furthermore, a polylactic acid resin modified with an organic peroxide may be referred to as a modified polylactic acid resin. In the polylactic acid resin composition of the present invention, the organic peroxide used for modification may remain, although in a trace amount. Furthermore, it is allowable to mix other substances to form a mixture. In the present invention, these are collectively referred to as a polylactic acid resin composition.

[Method for producing polylactic acid resin composition]

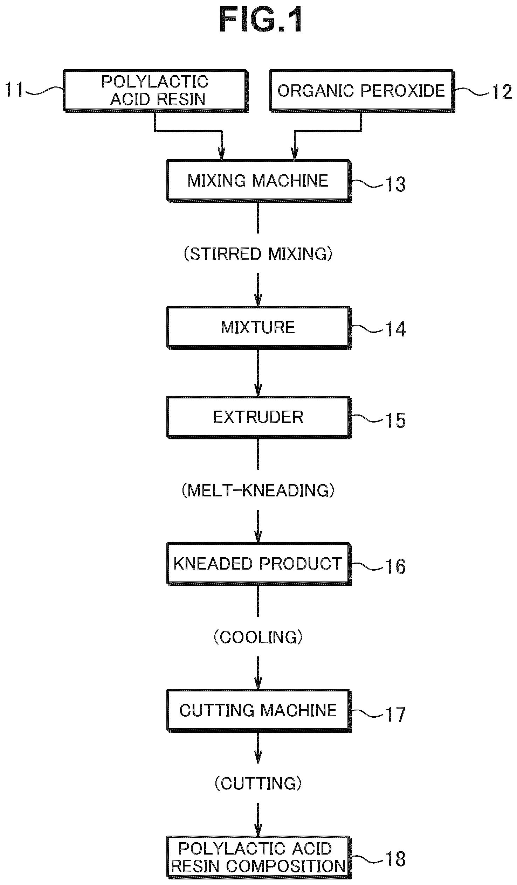

A suitable example of the method for producing a polylactic acid resin composition will be described based on FIG. 1.

As shown in FIG. 1, a polylactic acid resin 11 and an appropriate amount of an organic peroxide 12 are charged into a mixing machine 13 such as a ribbon blender. The mixture is sufficiently stirred and mixed in the mixing machine 13 to obtain a mixture 14.

The obtained mixture 14 is charged into an extruder 15. Melt-kneading is performed with the extruder 15 to obtain a strand (string)-shaped kneaded product 16.

The obtained kneaded product 16 is sufficiently cooled and cut into a predetermined length with a cutting machine 17 called pelletizer.

As a result of the above, a pellet-shaped polylactic acid resin composition 18 is obtained. The size of the pellet is, for example, a cylinder having a diameter of 3 mm and a height of 3 mm. This pellet serves as the sample in the Examples that will be described below. Furthermore, the pellet is fed into an injection blow molding apparatus that will be mentioned below.

[Injection blow molding apparatus]

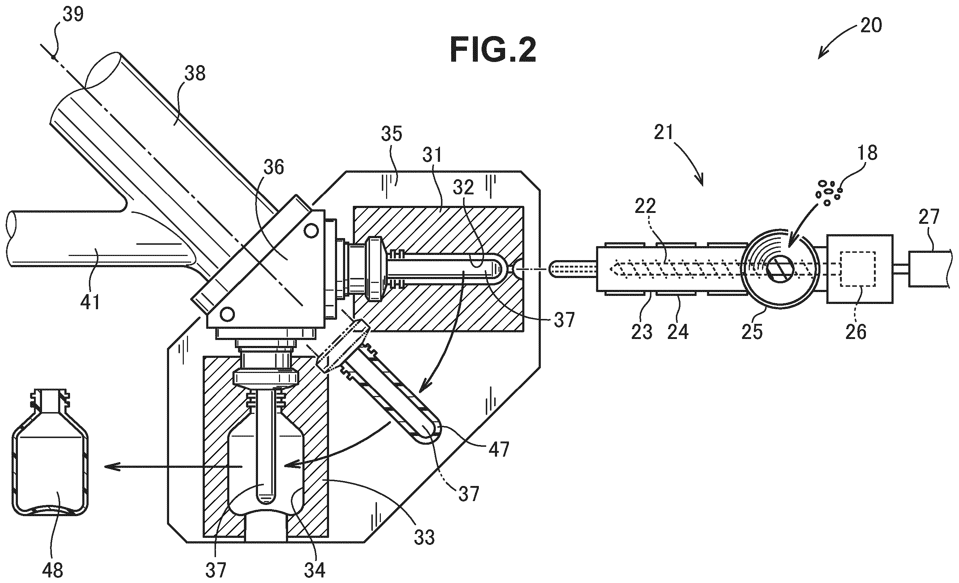

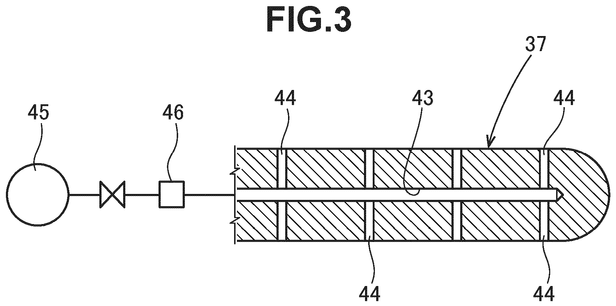

An apparatus for obtaining an injection blow molded body by using the polylactic acid resin composition (pellet) 18 as a starting material, is the injection blow molding apparatus. One specific example of this apparatus will be described based on FIG. 2 and FIG. 3.

As shown in FIG. 2, the injection blow molding apparatus 20 includes an injection device 21, a parison mold 31, and a blow mold 33 as main elements.

The injection device 21 has a heating barrel 23 incorporating a screw 22, includes a heater 24 and a hopper 25, and includes a screw rotating mechanism 26 and a heating barrel moving mechanism 27.

The heating barrel 23 is maintained at, for example, 220°C by the heater 24.

The parison mold 31 and the blow mold 33 are arranged in a split mold 35. A rotary head 36 is disposed along this split mold 35, and a rod-shaped core 37 is attached to this rotary head 36.

The rotary head 36 is rotated 180° around an axis 39 by a rotating mechanism 38 and is moved to a standby position by a moving cylinder 41.

By the core 37, a parison cavity 32 is formed in the parison mold 31, and a blow cavity 34 is formed in the blow mold 33.

The heating barrel 23 is caused to advance by the heating barrel moving mechanism 27, and the nozzle is brought into contact with the parison mold 31. When the screw 22 is rotated by the screw rotating mechanism 26, the polylactic acid resin composition 18 at about 220°C is injected. This step is referred to as an injection step.

The blowing step for blow molding is carried out in the blow mold 33.

As shown in FIG. 3, the core 37 is provided with a fluid passage 43 along its central axis, and is provided with a large number of radial passages 44 along the radial axis that is orthogonal to the central axis. The radial passage 44 extends from the fluid passage 43 and opens to the outside of the core 37. A high-pressure fluid source 45 is connected to the fluid passage 43, and the supply and stop of a high-pressure fluid (for example, compressed air at normal temperature) is controlled by a flow channel open/close valve 46 provided in the mold.

During the injection step, the radial passage 44 is in a closed state.

In the blowing step, the radial passage 44 is opened by the operation of the flow channel open/close valve 46, the high-pressure fluid from the high-pressure fluid source 45 is blown to the outside of the core 37, and as a result, blow molding is carried out.

When the blowing step is completed, the radial passage 44 is closed by the operation of the flow channel open/close valve 46.

In FIG. 2, in the injection blow molding apparatus 20, the rotary head 36 was rotated 180° around the axis 39; however, the rotary head 36 may be made to move linearly without rotating. That is, the parison mold 31 and the blow mold 33 are arranged such that the axis of the parison mold 31 and the axis of the blow mold 33 are parallel to each other, and the head having the core 37 is moved along an axis that are orthogonal to these axes. By alternately arranging a number of parison molds 31 and a number of blow molds 33 along the orthogonal axis, an injection blow molding apparatus having high productivity is provided.

Therefore, the injection blow molding apparatus 20 is not limited to the structure illustrated in FIG. 2, and may have any structure.

The action of the injection blow molding apparatus 20 having the above-described configuration will be described below.

In FIG. 2, a polylactic acid resin composition at about 220°C is injected from the injection device 21 into the parison cavity 32 to mold a parison. Next, the parison mold 31 is opened, and a parison 47 is transferred to the blow mold 33 by rotating the rotary head 36. In this process of movement, the temperature of the parison 47 was measured using a surface thermometer and was found to be about 180°C.

The temperature of the blow mold 33 is controlled to 25°C to 50°C. The parison 47 is placed in the blow mold 33.

When a high-pressure fluid is ejected from the radial passage shown in FIG. 3, the parison 47 inflates so as to conform to the external shape of the blow cavity 34.

An injection blow molded body 48 is obtained by opening the blow mold 33 and removing it from the core 37.

This injection blow molded body 48 is obtained by injection blow molding the polylactic acid resin composition according to the present invention (FIG. 1, reference numeral 18). Since a polylactic acid resin composition (FIG. 1, reference numeral 18) is used, an injection blow molded body 48 that is free from any rupture or cracking and has satisfactory appearance is obtained.

Furthermore, in the method for producing an injection blow molded body, an injection blow molded body is obtained by injection blow molding the polylactic acid resin composition according to the present invention (FIG. 1, reference numeral 18). Since the injection blow molded body is produced with a high yield, the productivity of the injection blow molded body can be increased by the method for producing an injection blow molded body of the present invention.

More particularly, the method for producing an injection blow molded body of the present invention includes:

a preparation step of preparing an injection blow molding apparatus (FIG. 2, reference numeral 20) having an injection device (FIG. 2, reference numeral 21) that injects a molten polylactic acid resin composition, a parison mold (FIG. 2, reference numeral 31) that molds a parison (FIG. 2, reference numeral 47), and a blow mold (FIG. 2, reference numeral 33) that performs blow molding;

a parison molding step of injecting the polylactic acid resin composition into the parison mold (FIG. 2, reference numeral 31) with the injection device (FIG. 2, reference numeral 21) to obtain the parison (FIG. 2, reference numeral 47);

a transfer step of transferring the obtained parison from the parison mold (FIG. 2, reference numeral 31) to the blow mold (FIG. 2, reference numeral 33); and

a blow molding step of obtaining an injection blow molded body (FIG. 2, reference numeral 48) by blow molding the transferred parison in the blow mold (FIG. 2, reference numeral 33).

EXAMPLES

Hereinafter, the present invention will be specifically described by way of Examples and Comparative Examples; however, the present invention is not intended to be limited to the following Examples.

[Production of sample]

A sample is generally produced based on FIG. 1; however, the details of the production in each Example and each Comparative Example are as follows.

(Example 1 (sample))

100 parts by mass of a polylactic acid resin ("FY804" manufactured by ANHUI BBCA BIOCHEMICAL CO., LTD.)) and 0.50 parts by mass of an organic peroxide: t-butylperoxyisopropyl monocarbonate ("TRIGONOX BPIC-75" manufactured by KAYAKU NOURYON CORPORATION) were stirred and mixed in a ribbon blender to obtain a mixture.

The obtained mixture was fed into a twin-screw extruder (L/D = 31.5, D represents the outer diameter of the screw, and L represents the effective length of the screw) having an opening diameter of 57 mm. The set temperature of the feeding unit was set to 170°C, the temperature thereafter was set to 200°C, the mixture was meltkneaded in a twin-screw extruder under the conditions of a speed of rotation of 100 rpm, and a kneaded product was extruded in the form of strands at a discharge rate of 30 kg/h through a die having an orifice diameter of 3 mm and a number of holes of 18, which was attached to the tip of the extruder.

Next, the extruded kneaded product in the form of strands was cooled by passing the kneaded product through a cooling water tank accommodating water at 30°C and having a length of 2 m. The cooled strands were cut with a pelletizer to obtain pellets of the modified polylactic acid resin composition.

(Example 2 (sample))

The amount of the organic peroxide was changed to 0.45 parts by mass. Except for this, pellets of the polylactic acid resin composition were produced by a method similar to that of Example 1.

(Example 3 (sample))

0.40 parts by mass of $\alpha,\alpha'$-di-t-butylperoxydiisopropylbenzene ("PERBUTYL P" manufactured by NOF CORPORATION) was added as the organic peroxide, instead of t-butylperoxyisopropyl monocarbonate. Except for this, pellets of the polylactic acid resin composition were produced by a method similar to that of Example 1.

(Example 4 (sample))

"FY212" manufactured by ANHUI BBCA BIOCHEMICAL CO., LTD. was used as the polylactic acid resin, and the amount of the organic peroxide was changed to 1.30 parts by mass. Except for this, pellets of the polylactic acid resin composition were produced by a method similar to that of Example 1.

(Example 5 (sample))

"FY804" manufactured by ANHUI BBCA BIOCHEMICAL CO., LTD. was used as the polylactic acid resin, 0.30 parts by mass of t-butyl peroxy-3,5,5-trimethylhexanoate ("TRIGONOX 42" manufactured by KAYAKU NOURYON CORPORATION) was used as the organic peroxide, and 0.50 parts by mass of an epoxy group-containing acryl-modified styrene-based resin ("Joncryl ADR 4468" manufactured by BASF) was used as the crosslinking aid. Except for this, pellets of the polylactic acid resin composition were produced by a method similar to that of Example 1.

(Comparative Example 1 (sample))

"FY801" manufactured by ANHUI BBCA BIOCHEMICAL CO., LTD. was used as the polylactic acid resin. Except for this, pellets of the polylactic acid resin composition were produced by a method similar to that of Example 1.

(Comparative Example 2 (sample))

"FY804" manufactured by ANHUI BBCA BIOCHEMICAL CO., LTD. was used as the polylactic acid resin; however, the resin was used as it was, without performing a modification operation.

(Comparative Example 3 (sample))

"Biopolymer Ingeo 4032D" manufactured by Nature Works LLC was used as the polylactic acid resin. Except for this, pellets of the polylactic acid resin composition were produced by a method similar to that of Example 1.

(List of samples)

The samples described above are listed as follows in tables in an easy-to-read manner. That is, Table 1 shows the grades of the polylactic acid resins, Table 2 shows the grades of the organic peroxides and crosslinking aids, and Table 3 shows the compositions of the samples, that is, the pellet-shaped polylactic acid resin compositions.

[Table 1]

|  | Manufacturer's name | Grade |
|---|---|---|
| Polylactic acid resin | ANHUI BBCA BIOCHEMICAL CO., LTD. | FY804 |
|  | ANHUI BBCA BIOCHEMICAL CO., LTD. | FY212 |
|  | ANHUI BBCA BIOCHEMICAL CO., LTD. | FY801 |
|  | Nature Works | *4032D |

*4032D: Biopolymer Ingeo 4032D

[Table 2]

|  | Manufacturer's name | Grade |
|---|---|---|
| Organic peroxide | KAYAKU NOURYON CORPORATION | * TRIGONOX BPIC-75 |
|  | NOF CORPORATION | *2 PERBUTYL P |
|  | KAYAKU NOURYON CORPORATION | *3 TRIGONOX 42 |

(continued)

|  | Manufacturer's name | Grade |
|---|---|---|
| Crosslinking aid | BASF | *4 Joncryl ADR 4468 |

* BPIC-75: t-butylperoxyisopropyl monocarbonate
*2 PERBUTYL P: $\alpha,\alpha'$-di-t-butylperoxydiisopropylbenzene
*3 TRIGONOX 42: t-butyl peroxy-3,5,5-trimethylhexanoate
*4 Joncryl ADR 4468: epoxy group-containing acryl-modified styrene-based resin

[Table 3]

| | | Example 1 | Example 2 | Example 3 | Example 4 | Example 5 | Comparative Example 1 | Comparative Example 2 | Comparative Example 3 |
|---|---|---|---|---|---|---|---|---|---|
| Polylactic acid resin | FY804 | 100 parts by mass | 100 parts by mass | 100 parts by mass | - | 100 parts by mass | - | 100 parts by mass | - |
| | FY212 | - | - | | 100 parts by mass | - | - | - | - |
| | FY801 | - | - | - | - | - | 100 parts by mass | - | - |
| | 4032D | - | - | - | - | - | - | - | 100 parts by mass |
| Organic peroxide | BPIC-75 | 0.50 parts by mass | 0.45 parts by mass | - | 1.30 parts by mass | - | 0.50 parts by mass | - | 0.50 parts by mass |
| | PERBUTYL P | - | | 0.40 parts by mass | - | - | - | - | - |
| | TRIGONOX 42 | - | - | - | - | 0.30 parts by mass | - | - | - |
| Crosslinking aid | Joncryl ADR 4468 | - | - | - | - | 0.50 parts by mass | - | - | - |

EP 4 603 539 A1

In order to evaluate each of the samples, measurement of various physical property values is carried out. The measurement methods and the various physical property values thus obtained are described below.

Incidentally, only the proportion of the D-form that will be described below was measured using the polylactic acid resin because there was no difference between the polylactic acid resin and the modified polylactic acid resin composition.

[Proportion of D-form]

In the polylactic acid resin, when the proportion of the D-form is excessively small, the crystallization rate becomes fast, allowing crystallization to proceed during injection blow molding, and moldability is decreased. Furthermore, in the polylactic acid resin, when the proportion of the D-form is excessively large, yellowing of the resin occurs noticeably, and the appearance is deteriorated. Thus, it is required to manage the proportion of the D-form to be within an appropriate range.

(Preferable proportion of D-form)

The proportion of the D-form in the polylactic acid resin is preferably 3.0 mol% or more and 20.0 mol% or less, more preferably 3.3 mol% or more and 18 mol% or less, and particularly preferably 3.5 mol% or more and 15 mol% or less.

The same also applies to the polylactic acid resin composition.

(Measurement method for proportion of D-form)

The measurement method for the proportion occupied by the D-form in the sum of the D-form and the L-form will be described below.

The lactic acid content of the D-form or the L-form in the polylactic acid resin can be measured by the following method. A polylactic acid resin is subjected to freeze-pulverization. 200 mg of a powder of the pulverized polylactic acid resin is fed into an Erlenmeyer flask. Next, 30 mL of a 1 N aqueous solution of sodium hydroxide is introduced into the Erlenmeyer flask. Then, the Erlenmeyer flask is heated to 65°C while shaking, to completely dissolve the polylactic acid resin.

Next, 1 N hydrochloric acid was fed into the Erlenmeyer flask to neutralize the content, and a decomposed solution having a pH of 4 to 7 is produced. The produced decomposed solution is adjusted to have a predetermined volume using a measuring flask. Next, the decomposed solution is filtered through a 0.45-$\mu$m membrane filter. The filtered decomposed solution is analyzed using liquid chromatography. Based on the chart obtained by the analysis, the amount of the D-form and the amount of the L-form are calculated by taking the area ratio of the peak areas originating from the D-form and the L-form, as the abundance ratio.

The above-described measurement method is repeated five times. The arithmetic means of the amount of the D-form and the amount of the L-form thus obtained are determined to obtain the amount of the D-form and the amount of the L-form of the polylactic acid, respectively.

The above explanation has been given on the polylactic acid resin; however, the proportion of the D-form is also checked for the polylactic acid resin composition by a similar measurement method.

(Measurement conditions for liquid chromatography)

Liquid chromatography apparatus (High Performance Liquid Chromatograph): Product name PU-2085 Plus system manufactured by JASCO Corporation
Column: Product name SUMICHIRAL OA5000 (4.6 mm in diameter $\times$ 250 mm in length) manufactured by Sumika Chemical Analysis Service, Ltd.
Column temperature: 25°C
Mobile phase: Mixed liquid of 2 mM aqueous solution of $CuSO_4$ and 2-propanol (aqueous solution of $CuSO_4$ : 2-propanol (volume ratio) = 95 : 5)
Flow rate of mobile phase: 1.0 mL/min
Detector: UV 254 nm
Injection amount: 20 $\mu$L

(Proportion of D-form obtained by measurement)

The proportion of the D-form in Example 1 was 3.5 mol%, the proportion of the D-form in Example 2 was 3.5 mol%, the proportion of the D-form in Example 3 was 3.5 mol%, the proportion of the D-form in Example 4 was 12.0 mol%, the proportion of the D-form in Example 5 was 3.5 mol%, the proportion of the D-form in Comparative Example 1 was 1.0 mol%, the proportion of the D-form in Comparative Example 2 was 3.5 mol%, and the proportion of the D-form in Comparative Example 3 was 1.4 mol%.

[Melt tension]

When the melt tension is too low, the strength becomes low, and the molded body may rupture during injection blow molding. Furthermore, when the melt tension is too high, stretching is less likely to occur, and the molded body may crack during injection blow molding. Thus, the melt tension is required to be within an appropriate range.

(Preferable melt tension)

The polylactic acid resin composition of the present embodiment shows a specific characteristic value in the measurement of the melt tension at 190°C.
Specifically, the polylactic acid resin composition shows a melt tension of 20.0 cN or more and 85.0 cN or less in the measurement of the melt tension at 190°C.
The melt tension of the polylactic acid resin composition is preferably 80.0 cN or less, more preferably 75.0 cN or less, even more preferably 65 cN or less, still more preferably 63.0 cN or less, and even more preferably 60.0 cN or less.
The melt tension of the polylactic acid resin composition is preferably 22.0 cN or more, and more preferably 25.0 cN or more.
Since the polylactic acid resin composition of the present embodiment has a melt tension of 20.0 cN or more, rupture of the molded body during blow molding can be suppressed.
Furthermore, since the polylactic acid resin composition of the present embodiment has a melt tension of 85.0 cN or less, the polylactic acid resin composition shows satisfactory elongation during blow molding, and cracking can be suppressed.

(Measurement method for melt tension)

The melt tension was measured using a "Capilograph 1D" (with a special option of heating furnace) capillary rheometer manufactured by TOYO SEIKI SEISAKU-SHO, LTD. and "Rheotens 71.97" manufactured by GÖTTFERT Werkstoff-Prüfmaschinen GmbH. The measurement conditions are as follows.

(Measurement conditions)

The sample was vacuum-dried in advance at 70°C for 5 hours. Rheotens 71.97 was installed such that the distance from the die outlet of Capilograph 1D to the measurement unit was 80 mm. First, a barrel heated to a testing temperature of 190°C was filled with a sample, and then the sample was preheated for 5 minutes. The measurement time was set so as not to exceed 10 minutes, including the preheating time, after the barrel was filled. Next, a piston was inserted from the upper part of the barrel, and the molten resin was extruded in a string shape. At this time, the piston descending speed (20 mm/min) was kept constant, and the extruded string-shaped product was passed through the wheel of Rheotens. Thereafter, the take-up speed was gradually increased, and the melt tension of the sample was measured.
Regarding the measurement results, the average between the maximum value and the minimum value of the tension immediately before the point at which the string-shaped product broke, was taken as the melt tension of the sample.
Incidentally, when there was only one maximum point in the tension chart, that maximum value was taken as the melt tension.
Furthermore, when the string-shaped product became thinner, and winding was in an idling state, that time point was regarded as the breaking point, and the average of the maximum value and the minimum value of tension immediately before that time point was taken as the melt tension of the sample.

(Measurement conditions for Capilograph 1D)

Die: diameter 2.095 mm, length 8 mm, inflow angle 90° (conical)
Barrel diameter: 9.55 mm
Piston speed: 20 mm/min

Measurement temperature: 190°C

(Measurement conditions for Rheotens)

Wheel spacing: top 0.6 to 0.8 mm, bottom 1.0 mm
Acceleration: 10 mm/s$^2$
Take-up speed: initial speed 6.92 mm/s

(Melt tension obtained by measurement)

The melt tension in Example 1 was 51.8 cN, the melt tension in Example 2 was 47.5 cN, the melt tension in Example 3 was 52.4 cN, the melt tension in Example 4 was 28.7 cN, the melt tension in Example 5 was 72.3 cN, the melt tension in Comparative Example 1 was 48.8 cN, the melt tension in Comparative Example 2 was 1.7 cN, and the melt tension in Comparative Example 3 was 68.5 cN.

[Crystallization temperature]

In the injection blow molding method, a parison is formed in the parison mold, and the parison is blow molded in the injection blow mold. The parison is rapidly cooled inside the blow mold. A polylactic acid resin composition at a high temperature may crystallize in a process in which the temperature drops.
When crystallization occurs at an early stage of injection blow molding, there will be problems in subsequent blow molding. In contrast, there will be no problem even if crystallization occurs at an end stage of blow molding (when blow molding is finished).
Thus, the crystallization temperature is measured.

(Preferable crystallization temperature)

The crystallization temperature of the polylactic acid resin composition, as measured in a process of temperature decrease at 5°C/min using a differential scanning calorimeter, is preferably 120°C or lower, more preferably 118°C or lower, and particularly preferably 115°C or lower.
When the crystallization temperature of the polylactic acid resin composition of the present embodiment is 120°C or lower, crystallization during injection blow molding can be suppressed, and blowing failure due to crystallization can be suppressed.

(Measurement method for crystallization temperature)

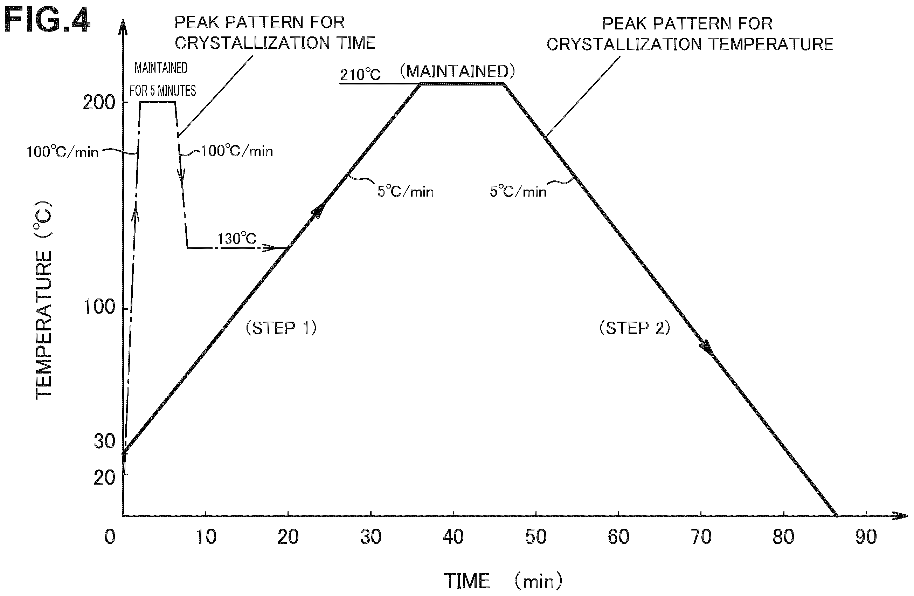

The crystallization temperature was measured by the method described in JIS K7121:1987 and JIS K7121:2012. However, the sampling method and the temperature conditions were as follows.
5.5 ± 0.5 mg of a sample was packed on the bottom of an aluminum measuring container such that there were no gaps. The container was covered with an aluminum lid.
Next, a differential scanning calorimetric analysis was performed using a "DSC7000X, AS-3" differential scanning calorimeter manufactured by Hitachi High-Tech Science Corporation. At a nitrogen gas flow rate of 20 mL/min, heating and cooling of the sample was performed in the following steps, and a differential scanning calorimetric curve (hereinafter, abbreviated as DSC curve) was obtained.
(Step 1) Temperature was increased from 30°C to 210°C and maintained for 10 minutes.
(Step 2) Temperature was decreased from 210°C to 0°C (cooling).
Incidentally, all the temperature increases and temperature decreases were carried out at a rate of 5°C/min. Alumina was used as a reference material. Using the analysis software attached to the apparatus, the temperature at the crystallization peak top observed in the process of temperature decrease was read and taken as the crystallization temperature.
For the ease of understanding, a heat pattern for crystallization temperature and a heat pattern for crystallization time are shown in FIG. 4. Incidentally, the heat pattern for crystallization time will be used later.
In FIG. 4, in the heat pattern for crystallization temperature, a crystallization peak is expected to occur during the process of temperature decrease indicated in (Step 2).

(Crystallization temperature obtained by measurement)

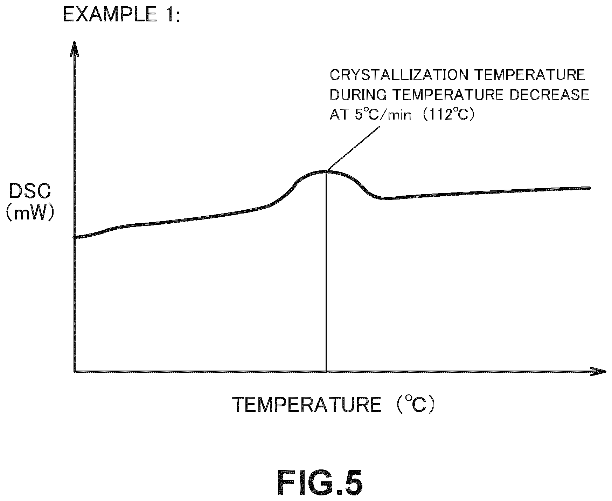

A DSC curve diagram related to the crystallization temperature of Example 1 is shown in FIG. 5.

As shown in FIG. 5, the crystallization temperature of Example 1 was 112°C.

Although the DSC curve diagrams will not be shown, the crystallization temperature of Example 2 was 113°C, the crystallization temperature of Example 3 was 110°C, the crystallization temperature of Example 5 was 114°C, the crystallization temperature of Comparative Example 1 was 136°C, and the crystallization temperature of Comparative Example 3 was 128°C.

Although the DSC curve diagrams will not be shown, in Example 4 and Comparative Example 2, a crystallization peak such as shown in FIG. 5 was not present.

[Crystallization time]

When crystallization occurs in the process of temperature decrease during injection blow molding, fewer problems will occur as crystallization begins more lately. Thus, the crystallization time is measured.

(Measurement method for crystallization time)

The crystallization time was measured by the following method. The sampling method and the temperature conditions were as follows. $5.5 \pm 0.5$ mg of a sample was packed on the bottom of an aluminum measuring container such that there were no gaps. Then, the container was covered with an aluminum lid.

next, a differential scanning calorimetric analysis was performed using a "DSC7000X, AS-3" differential scanning calorimeter manufactured by Hitachi High-Tech Science Corporation. At a nitrogen gas flow rate of 20 mL/min, heating and cooling of the sample was performed in the following steps, and a DSC curve was obtained.

(Step 1) Temperature was increased from 20°C to 200°C (100°C/min) and then maintained at 200°C for 5 minutes.

(Step 2) Temperature was decreased from 200°C to 130°C (100°C/min) and then maintained at 130°C to allow crystallization. Regarding the crystallization time, half the value of the time from the crystallization peak initiation time to the crystallization peak top time was taken as the crystallization time.

The heat pattern for crystallization time is shown in FIG. 4.

In the heat pattern for crystallization time in FIG. 4, there is a possibility that a crystallization peak may occur during maintaining at 130°C. Since it is only a possibility, there may be no crystallization peak.

(Crystallization time obtained by measurement)

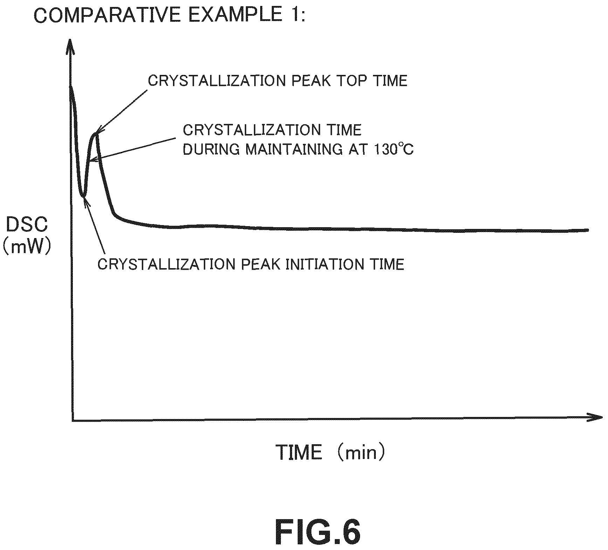

A DSC curve diagram related to the crystallization time of Comparative Example 1 is shown in FIG. 6.

As shown in FIG. 6, in Comparative Example 1, there was a crystallization peak when the sample was maintained at 130°C. The crystallization time in Comparative Example 1 was 8.45 min.

Although the crystallization peak will not be shown, in Comparative Example 3, there was a crystallization peak when the sample was maintained at 130°C, and the crystallization time was 8.95 min.

Although the crystallization peak will not be shown, in Example 5, there was a crystallization peak when the sample was maintained at 130°C, and the crystallization time was 23.10 min.

In contrast, in Example 1, Example 2, Example 3, Example 4, and Comparative Example 2, there was no crystallization peak when the samples were maintained at 130°C.

[Melt mass flow rate (MFR)]

Fluidity of a resin material is important for resin molding. When fluidity is too poor, the cavity is filled insufficiently, and molding failure occurs. When fluidity is too good, leakage occurs through gaps and the like in the mold. The same also applies to the polylactic acid resin composition.

It is preferable that the polylactic acid resin composition exhibits suitable fluidity when thermally melted.

(Preferable melt mass flow rate)

With regard to the polylactic acid resin composition, the melt mass flow rate at a temperature of 190°C and a nominal load of 21.18 N is preferably 0.1 g/10 min or more, more preferably 0.2 g/10 min or more, and particularly preferably 0.3 g/10 min or more.

Furthermore, with regard to the polylactic acid resin composition, the melt mass flow rate at a temperature of 190°C and a nominal load of 21.18 N is preferably 20.0 g/10 min or less, more preferably 18.0 g/10 min or less, even more preferably 15.0 g/10 min or less, still more preferably 10.0 g/10 min or less, and particularly preferably 8.0 g/10 min or less.

(Measurement method for melt mass flow rate)

The melt mass flow rate was measured according to JIS K 7210:1999. The melt mass flow rate was measured by "b) Method for measuring the time taken by a piston to move a predetermined distance" described in Method B of the same standard. The melt mass flow rate was measured using "Melt Flow Index Tester (Automatic) 120-SAS" manufactured by YASUDA SEIKI SEISAKUSHO, LTD. Samples that had been vacuum-dried at 70°C for 5 hours and then sealed and stored in a desiccator until immediately before measurement, were used.

(Measurement conditions for melt mass flow rate)

Sample: 3 to 8 g
Preheating 1: 200 seconds
Preheating 2: 30 seconds
Test temperature: 190°C
Test load (nominal load): 21.18 N
Piston travel distance (interval): 25 mm

The number of times for testing each sample was set to three times, and the average was taken as the value of the melt mass flow rate (g/10 min).

(Melt mass flow rate (MFR) obtained by measurement)

The MFR of Example 1 was 0.3 g/10 min, the MFR of Example 2 was 0.4 g/10 min, the MFR of Example 3 was 1.2 g/10 min, the MFR of Example 4 was 8.2 g/10 min, the MFR of Example 5 was 0.6 g/10 min, the MFR of Comparative Example 1 was 2.5 g/10 min, the MFR of Comparative Example 2 was 4.3 g/10 min, and the MFR of Comparative Example 3 was 2.3 g/10 min.

[Shear viscosity]

When the material is crystalline, the moldability can be improved by keeping the temperature high during molding and delaying the reaching to the crystallization temperature. When the shear viscosity is high, a certain degree of viscosity can be maintained even at high temperatures, and the temperature during molding can be increased.
Thus, the shear viscosity of the polylactic acid resin composition is measured.

(Measurement of shear viscosity)

The measurement of the shear viscosity was performed using a "Capilograph 1D" (with a special option of heating furnace) capillary rheometer manufactured by TOYO SEIKI SEISAKU-SHO, LTD. under the following conditions.

(Measurement conditions for shear viscosity)

A sample was vacuum-dried in advance at 70°C for 5 hours.

(Measurement conditions for Capilograph 1D)

Die: diameter 1.0 mm, length 10 mm, inflow angle 90 degrees (conical)
Barrel diameter: 9.55 mm
Piston speed: 8.22 mm/min (shear rate 100 1/s))
Measurement temperature: 190°C
Preheating time: 5 minutes

(Shear viscosity obtained by measurement)

The shear viscosity of Example 1 was 2456 Pa·s, the shear viscosity of Example 2 was 2467 Pa·s, the shear viscosity of Example 3 was 1756 Pa·s, the shear viscosity of Example 4 was 699 Pa·s, the shear viscosity of Example 5 was 2430 Pa·s, the shear viscosity of Comparative Example 1 was 1182 Pa·s, the shear viscosity of Comparative Example 2 was 1070 Pa·s, and the shear viscosity of Comparative Example 3 was 733 Pa·s.

[Gel fraction]

When the proportion of gel (gel fraction) is large, the appearance is deteriorated. Thus, the gel fraction is measured.

(Preferable gel fraction)

The gel fraction included in the polylactic acid resin composition of the present embodiment is preferably 15.0% by mass or less, more preferably 13.0% by mass or less, and particularly preferably 10.0% by mass or less.

(Measurement method for gel fraction)

The measurement of the gel fraction (% by mass) was performed by the following method. About 0.5 g of a sample was prepared, and the initial mass (m0 (g)) of this sample was precisely weighed. Furthermore, a 200-mesh wire screen (wire diameter 0.05 mm) was prepared for filtering a solution in which this sample was dissolved. The initial mass (M0 (g)) of this wire screen was also precisely weighed. The weighed measurement sample was introduced into a beaker (100 mL). 50 mL of chloroform as a solvent and a stirrer bar were introduced into the beaker, and the beaker was covered with an aluminum foil lid. Stirring was performed with a stirrer for 2 hours, and the measurement sample was dissolved at normal temperature. After 2 hours, the aluminum foil was removed, and the dissolution product in the beaker was filtered through the wire screen. After filtering, the wire screen was subjected to natural drying for 12 hours or longer in a draught. After natural drying, this wire screen was further dried in a constant-temperature dryer at 120°C for 2 hours. The wire screen after drying was cooled in a desiccator. After cooling, the wire screen to which resin insoluble were attached was weighed, and the gel fraction was calculated by the following formula.
(Method for calculating gel fraction)

$$\text{Gel fraction (\% by mass)} = (m1/m0) \times 100$$

m0: Initial mass of sample
m1: mass of resin insoluble (M1 - M0)
M0: Initial mass of wire screen
M1: Total mass of resin insoluble and wire screen

(Gel fraction obtained by measurement)

The gel fraction of Example 1 was 1.1% by mass, the gel fraction of Example 2 was 0.9% by mass, the gel fraction of Example 3 was 1.8% by mass, the gel fraction of Example 4 was 11.7% by mass, the gel fraction of Example 5 was 0.7% by mass, the gel fraction of Comparative Example 1 was 4.0% by mass, the gel fraction of Comparative Example 2 was 0.4% by mass, and the gel fraction of Comparative Example 3 was 3.9% by mass.

[Prototype production of injection blow molded body and evaluation thereof]

(Prototype production of injection blow molded body)

Each of polylactic acid resin compositions (pellets) having the compositions indicated in Table 3 is fed into the injection blow molding apparatus 20 shown in FIG. 2, a parison (FIG. 2, reference numeral 47) is produced with this injection blow molding apparatus 20, and this parison is blown to produce a prototype of an injection blow molded body (FIG. 2, reference numeral 48).

(Evaluation of continuous blow moldability)

The injection blow molding apparatus (FIG. 2, reference numeral 20) is continuously operated to obtain a large number of prototypes. At this time, an evaluation is made to see whether the blow molding was performed smoothly without delay.

The best is rated as ⊙ (very good), good is rated as O (good), and poor is rated as × (bad).

Example 1 was ○, Example 2 was ⊙, Example 3 was ⊙, Example 4 was ○, Example 5 was ⊙, Comparative Example 1 was ×, Comparative Example 2 was ×, and Comparative Example 3 was ×.

(Evaluation of single-shot blow moldability)

The injection blow molding apparatus (FIG. 2, reference numeral 20) is operated in a single shot to obtain one prototype. At this time, an evaluation is made to see whether blow molding was performed smoothly without delay.

Example 1 was ○, Example 2 was ⊙, Example 3 was ⊙, Example 4 was ○, Example 5 was ⊙, Comparative Example 1 was ×, Comparative Example 2 was ×, and Comparative Example 3 was ×.

(Evaluation of appearance)

For the prototypes obtained by continuous operation and single-shot operation, the appearance is observed.

Example 1 was ⊙, Example 2 was ⊙, Example 3 was ⊙, Example 4 was ○, Example 5 was ⊙, Comparative Example 1 was ×, Comparative Example 2 was ×, and Comparative Example 3 was ×.

The above-described evaluations are summarized in Table 4.

[Table 4]

| | Example 1 | Example 2 | Example 3 | Example 4 | Example 5 | Comparative Example 1 | Comparative Example 2 | Comparative Example 3 |
|---|---|---|---|---|---|---|---|---|
| Continuous blow moldability | ○ | ⊙ | ⊙ | ○ | ⊙ | × | × | × |
| Single-shot blow moldability | ○ | ⊙ | ⊙ | ○ | ⊙ | × | × | × |
| Appearance | ⊙ | ⊙ | ⊙ | ○ | ⊙ | × | × | × |
| Comprehensive evaluation | ○ | ⊙ | ⊙ | ○ | ⊙ | × | × | × |

⊙: very good, ○ : good, ×: bad

(Evaluation of injection blow moldability)

In Table 4, when the continuous blow moldability, single-shot blow moldability, and appearance were all rated as ⊙, the comprehensive evaluation was rated as ⊙.

In Table 4, when the continuous blow moldability, single-shot blow moldability, and appearance were all rated as a mixture of ⊙ and ○, or all rated as ○, the comprehensive evaluation was rated as O.

In Table 4, when the continuous blow moldability, single-shot blow moldability, and appearance were all rated as ×, the comprehensive evaluation was rated as ×.

The above-described comprehensive evaluation will be hereinafter referred to as "injection blow moldability".

In addition to that, the compositions, various physical properties, and evaluations of the polylactic acid resin compositions mentioned above are summarized and shown in Table 5.

[Table 5]

| | | Example 1 | Example 2 | Example 3 | Example 4 | Example 5 | Comparative Example 1 | Comparative Example 2 | Comparative Example 3 |
|---|---|---|---|---|---|---|---|---|---|
| Polylactic acid resin | FY804 | 100 parts by mass | 100 parts by mass | 100 parts by mass | - | 100 parts by mass | - | 100 parts by mass | - |
| | FY212 | - | - | - | 100 parts by mass | - | - | - | - |
| | FY801 | - | - | - | - | - | 100 parts by mass | - | - |
| | 4032D | - | - | - | - | - | - | - | 100 parts by mass |
| Organic peroxide | BPIC-75 | 0.50 parts by mass | 0.45 parts by mass | - | 1.30 parts by mass | - | 0.50 parts by mass | - | 0.50 parts by mass |
| | PERBUTYL P | - | - | 0.40 parts by mass | - | - | - | - | - |
| | TRIGONOX 42 | - | - | - | - | 0.30 parts by mass | - | - | - |
| Crosslinking aid | Joncryl ADR 4468 | - | - | - | - | 0.50 parts by mass | - | - | - |
| Proportion of D-form | mol% | 3.5 | 3.5 | 3.5 | 12.0 | 3.5 | 1.0 | 3.5 | 1.4 |
| Melt tension | cN | 51.8 | 47.5 | 52.4 | 28.7 | 72.3 | 48.8 | 1.7 | 68.5 |
| Crystallization temperature during temperature decrease at 5°C/min | °C | 112 | 113 | 110 | No peak | 114 | 136 | No peak | 128 |
| Crystallization time during maintaining at 130°C | min | No peak | No peak | No peak | No peak | 23.10 | 8.45 | No peak | 8.95 |
| Melt mass flow rate (MFR) (21.18 N) | g/10min | 0.3 | 0.4 | 1.2 | 8.2 | 0.6 | 2.5 | 4.3 | 2.3 |
| Shear viscosity | Pa·s | 2456 | 2467 | 1756 | 699 | 2430 | 1182 | 1070 | 733 |
| Gel fraction | % by mass | 1.1 | 0.9 | 1.8 | 11.7 | 0.7 | 4.0 | 0.4 | 3.9 |

(continued)

| | Example 1 | Example 2 | Example 3 | Example 4 | Example 5 | Comparative Example 1 | Comparative Example 2 | Comparative Example 3 |
|---|---|---|---|---|---|---|---|---|
| Injection blow moldability | ◯ | ⊙ | ⊙ | ◯ | ⊙ | × | × | × |
| ⊙: very good, ◯ : good, x: bad | | | | | | | | |

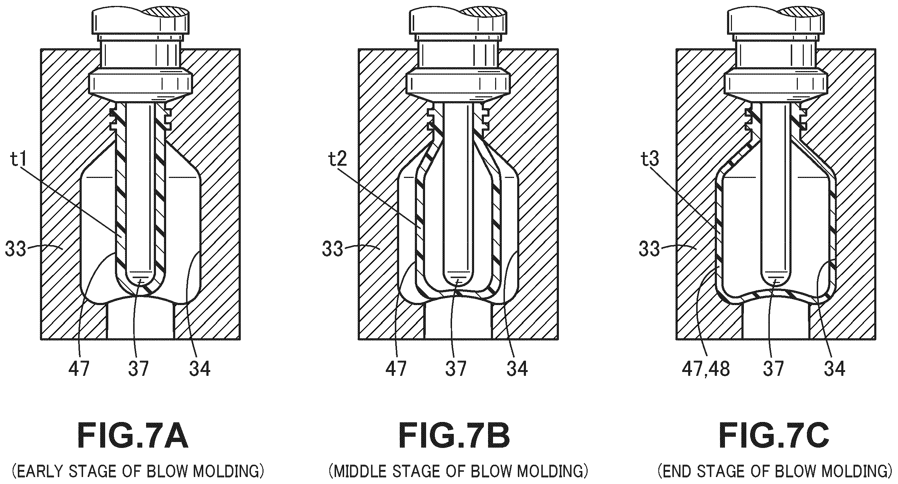

In order to examine Table 5, FIG. 7(a) to FIG. 7(c) are presented. FIG. 7(a) is a drawing that illustrates the configuration at an early stage of blow molding, FIG. 7(b) is a drawing that illustrates the configuration at a middle stage of blow molding, and FIG. 7(c) is a drawing that illustrates the configuration at an end stage of blow molding.

In FIG. 7(a), blow molding is initiated by ejecting compressed air from the core 37 onto the inner circumferential surface of the parison 47, and the temperature t1 of the parison 47 at this time is estimated to be about 150°C.

In FIG. 7(b), the parison 47 is inflating within the blow cavity 34. At this time, the parison 47 is cooled by compressed air at normal temperature and the blow mold 33 at 25°C to 50°C. The temperature t2 of the parison 47 at this time is estimated to be about 130°C.

In FIG. 7(c), the outer circumferential surface of the parison 47 comes into contact with the blow mold 33, and inflation is completed. The temperature t3 of the parison 47 at this time is estimated to be about 120°C. Thereafter, the parison 47 is sufficiently cooled, and an injection blow molded body 48 is obtained.

In the above-described Table 5, when attention is paid to the "Crystallization temperature during temperature decrease at 5°C/min" in the middle row, Comparative Example 1 is 136°C, and Comparative Example 3 is 128°C. These temperatures are close to the temperature t2 (about 130°C). In Comparative Example 1 and Comparative Example 2, it is conceived that crystallization occurred in the stage of FIG. 7(b) and hindered the subsequent blow molding, and as a result, the evaluation was rated as ×.

In contrast, in Example 1 to Example 3 and Example 5, the crystallization temperature during temperature decrease at 5°C/min is 120°C or lower. This temperature is close to or equal to lower than the temperature t3 (about 120°C). In Example 1 to Example 3 and Example 5, crystallization occurred in FIG. 7(c). In Example 1 to Example 3 and Example 5, since crystallization did not occur during inflation, blow moldability was improved, and the evaluation was rated as O or ⊙.

In Example 4, since there was no crystallization peak during temperature decrease at 5°C/min, blow moldability was improved, and the evaluation was rated as O.

Incidentally, in Comparative Example 2, although there is no crystallization peak during temperature decrease at 5°C/min, the melt tension is 1.7 cN. When the melt tension is less than 20.0 cN, rupture occurs during blow molding due to insufficient strength. Therefore, the evaluation is rated as ×.

As is obvious from the above description, when a polylactic acid resin composition has a melt tension at 190°C of 20.0 cN or more and 85.0 cN or less, and has a crystallization temperature of 120°C or lower or has no crystallization peak in a process of temperature decrease at 5°C/min using a differential scanning calorimeter, the polylactic acid resin composition has satisfactory injection blow moldability.

INDUSTRIAL APPLICABILITY

The polylactic acid resin composition of the present invention is suitable for injection blow molding.

EXPLANATIONS OF LETTERS OR NUMERALS

11　POLYLACTIC ACID RESIN
12　ORGANIC PEROXIDE
18　POLYLACTIC ACID RESIN COMPOSITION
20　INJECTION BLOW MOLDING APPARATUS
21　INJECTION DEVICE
31　PARISON MOLD
33　BLOW MOLD
47　PARISON
48　INJECTION BLOW MOLDED BODY

**Claims**

1. A polylactic acid resin composition for injection blow molding, obtained by modifying a polylactic acid resin with an organic peroxide and used for injection blow molding,

   wherein a melt tension at 190°C is 20.0 cN or more and 85.0 cN or less, and
   in a process of temperature decrease at 5°C/min conducted using a differential scanning calorimeter, a crystallization temperature is 120°C or lower, or there is no crystallization peak.

2. The polylactic acid resin composition for injection blow molding according to claim 1,
wherein the polylactic acid resin composition has a melt mass flow rate of 0.1 g/10 min or more and 20.0 g/10 min or less at a temperature of 190°C and a nominal load of 21.18 N.

3. The polylactic acid resin composition for injection blow molding according to claim 1,
wherein the polylactic acid resin composition has a melt mass flow rate of 0.1 g/10 min or more and 10.0 g/10 min or less at a temperature of 190°C and a nominal load of 21.18 N.

4. The polylactic acid resin composition for injection blow molding according to any one of claims 1 to 3,
wherein a proportion occupied by a D-form in a sum of a D-form and an L-form in the polylactic acid resin composition is 3.0 mol% or more and 20.0 mol% or less.

5. The polylactic acid resin composition for injection blow molding according to any one of claims 1 to 3,
wherein a proportion occupied by a D-form in a sum of a D-form and an L-form in the polylactic acid resin composition is 3.3 mol% or more and 18.0 mol% or less.

6. The polylactic acid resin composition for injection blow molding according to any one of claims 1 to 3,
wherein a proportion occupied by a D-form in a sum of a D-form and an L-form in the polylactic acid resin composition is 3.5 mol% or more and 15.0 mol% or less.

7. The polylactic acid resin composition for injection blow molding according to any one of claims 1 to 3,
wherein 100 parts by mass of the polylactic acid resin is modified using the organic peroxide at a proportion of 0.10 parts by mass or more and 3.00 parts by mass or less.

8. A method for producing a polylactic acid resin composition, intended for producing the polylactic acid resin composition according to any one of claims 1 to 3,
the method comprising producing the polylactic acid resin composition by melt-kneading 100 parts by mass of a polylactic acid resin composition in which a proportion occupied by a D-form in a sum of a D-form and an L-form is 3.0 mol% or more and 20.0 mol% or less, with an organic peroxide at a proportion of 0.10 parts by mass or more and 3.00 parts by mass or less.

9. An injection blow molded body obtained by injection blow molding the polylactic acid resin composition according to any one of claims 1 to 3.

10. A method for producing an injection blow molded body obtained by injection blow molding the polylactic acid resin composition according to any one of claims 1 to 3.

11. The method for producing an injection blow molded body according to claim 10, the method comprising:

a preparation step of preparing an injection blow molding apparatus having an injection device for injecting the polylactic acid resin composition in a molten state, a parison mold for molding a parison, and a blow mold for performing blow molding;
a parison molding step of injecting the polylactic acid resin composition into the parison mold using the injection device to obtain the parison;
a transfer step of transferring the obtained parison from the parison mold to the blow mold; and
a blow molding step of obtaining an injection blow molded body by blow molding the transferred parison in the blow mold.

# FIG.1

```
┌─────────────────┐        ┌──────────────────┐
11~│  POLYLACTIC     │        │ ORGANIC PEROXIDE │~12
   │  ACID RESIN     │        │                  │
   └────────┬────────┘        └────────┬─────────┘
            │                          │
            └──────────┐    ┌──────────┘
                       ▼    ▼
                 ┌──────────────────┐
                 │  MIXING MACHINE  │~13
                 └────────┬─────────┘
                          │
                          ▼
                  (STIRRED MIXING)
                          │
                          ▼
                 ┌──────────────────┐
                 │     MIXTURE      │~14
                 └────────┬─────────┘
                          │
                          ▼
                 ┌──────────────────┐
                 │     EXTRUDER     │~15
                 └────────┬─────────┘
                          │
                          ▼
                  (MELT-KNEADING)
                          │
                          ▼
                 ┌──────────────────┐
                 │ KNEADED PRODUCT  │~16
                 └────────┬─────────┘
                          │
                          ▼
                     (COOLING)
                          │
                          ▼
                 ┌──────────────────┐
                 │ CUTTING MACHINE  │~17
                 └────────┬─────────┘
                          │
                          ▼
                     (CUTTING)
                          │
                          ▼
                 ┌──────────────────┐
                 │ POLYLACTIC ACID  │~18
                 │ RESIN COMPOSITION│
                 └──────────────────┘
```

# FIG.2

EP 4 603 539 A1

# FIG.3

FIG.4

PEAK PATTERN FOR CRYSTALLIZATION TIME

PEAK PATTERN FOR CRYSTALLIZATION TEMPERATURE

MAINTAINED FOR 5 MINUTES

210°C （MAINTAINED）

100°C/min

100°C/min

5°C/min

5°C/min

130°C

(STEP 1)

(STEP 2)

TEMPERATURE （°C）

200

100

30

20

TIME （min）

0  10  20  30  40  50  60  70  80  90

EXAMPLE 1:

CRYSTALLIZATION TEMPERATURE DURING TEMPERATURE DECREASE AT 5°C/min (112°C)

DSC (mW)

TEMPERATURE (°C)

FIG.5

COMPARATIVE EXAMPLE 1:

CRYSTALLIZATION PEAK TOP TIME

CRYSTALLIZATION TIME
DURING MAINTAINING AT 130°C

DSC
(mW)

CRYSTALLIZATION PEAK INITIATION TIME

TIME (min)

FIG.6

**FIG.7A**

(EARLY STAGE OF BLOW MOLDING)

**FIG.7B**

(MIDDLE STAGE OF BLOW MOLDING)

**FIG.7C**

(END STAGE OF BLOW MOLDING)

## INTERNATIONAL SEARCH REPORT

International application No.

**PCT/JP2023/036664**

| A. | CLASSIFICATION OF SUBJECT MATTER |
|---|---|

*C08L 67/04*(2006.01)i; *B29C 49/06*(2006.01)i; *C08K 5/14*(2006.01)i
FI:   C08L67/04; B29C49/06; C08K5/14

According to International Patent Classification (IPC) or to both national classification and IPC

| B. | FIELDS SEARCHED |
|---|---|

Minimum documentation searched (classification system followed by classification symbols)

C08L67/04; B29C49/06; C08K5/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2004/099315 A1 (UNITIKA LTD.) 18 November 2004 (2004-11-18) claims, p. 9, lines 2-7, p. 21, lines 10-23, examples | 1-11 |
| X | JP 2003-128901 A (UNITIKA LTD.) 08 May 2003 (2003-05-08) claims, examples | 1, 4-11 |
| A | entire text | 2-3 |
| X | JP 2006-241227 A (UNITIKA LTD.) 14 September 2006 (2006-09-14) claims, examples | 1-3, 7, 9-11 |
| A | entire text | 4-6, 8 |
| A | JP 2020-49922 A (SEKISUI PLASTICS) 02 April 2020 (2020-04-02) entire text | 1-11 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

33

## INTERNATIONAL SEARCH REPORT
### Information on patent family members

International application No.

**PCT/JP2023/036664**

| Patent document cited in search report | | | Publication date (day/month/year) | Patent family member(s) | | | Publication date (day/month/year) |
|---|---|---|---|---|---|---|---|
| WO | 2004/099315 | A1 | 18 November 2004 | US 2007/0027247 A1<br>claims, paragraphs [0028], [0054], examples<br>EP 1624024 A1<br>CN 1771291 A<br>KR 10-2006-0036905 A | | | |
| JP | 2003-128901 | A | 08 May 2003 | (Family: none) | | | |
| JP | 2006-241227 | A | 14 September 2006 | (Family: none) | | | |
| JP | 2020-49922 | A | 02 April 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019183140 A
- JP 2007262222 A
- JP 2003171544 A